# EUROPÄISCHE PATENTSCHRIFT

(11) **EP 3 560 862 B1**
(45) Veröffentlichungstag und Bekanntmachung des Hinweises auf die Patenterteilung: **14.06.2023**
(21) Anmeldenummer: 19170156.4
(22) Anmeldetag: 18.04.2019
(51) Int. Cl.: B65G 25/06, B65G 47/14, B65G 35/00

(54) **ZUFÜHREINRICHTUNG FÜR SCHÜTTGUTARTIG BEREITGESTELLTE KLEINTEILE**
SUPPLY DEVICE FOR SMALL PARTS PROVIDED AS BULK GOODS
DISPOSITIF D'ALIMENTATION POUR PETITES PIÈCES FOURNIES EN VRAC

(30) Priorität: 25.04.2018 DE 102018206374
(43) Veröffentlichungstag der Anmeldung: 30.10.2019
(73) Patentinhaber: PSA Zuführtechnik GmbH, 52068 Aachen (DE)
(72) Erfinder: Kraft, Fritz, 74545 Michelfeld-Gnadental (DE)
(74) Vertreter: Patentanwälte Magenbauer & Kollegen Partnerschaft mbB

(56) Entgegenhaltungen:
- EP-A2- 1 547 946
- EP-A2- 2 495 204
- DE-A1- 2 048 447
- DE-A1-102015 102 143
- DE-A1-102015 111 008
- US-A1- 2007 069 087

## Beschreibung

Die Erfindung betrifft eine Zuführeinrichtung für schüttgutartig bereitgestellte Kleinteile, mit einem Stufenförderer, der ausgebildet ist, um in einem Abgabebereich einer zu der Zuführeinrichtung gehörenden, als ein Vibrationsförderer ausgebildeten ersten Zuführeinheit empfangene Kleinteile in einem auf einem höheren Höhenniveau als dieser Abgabebereich liegenden Zuführbereich an eine zu der Zuführeinrichtung gehörende zweite Zuführeinheit zu übergeben, wobei der Stufenförderer als ein Schwenk-Stufenförderer ausgebildet ist, der mindestens eine mittels einer Antriebseinrichtung unter Ausführung einer Schwenkbewegung um eine Schwenkachse hin und her verschwenkbare Schwenkeinheit umfasst, die eine beabstandet zu der Schwenkachse an einer quer von der Schwenkachse abstehenden Schwenkarmanordnung angebrachte, sich bei der Schwenkbewegung entlang einer Bogenstrecke bewegende Übergabeschütte für die zu übergebenden Kleinteile aufweist, wobei dem Abgabebereich der ersten Zuführeinheit eine bewegliche Absperrwand zugeordnet ist, deren Bewegung mit der Schwenkbewegung der zugeordneten Schwenkeinheit derart koordiniert ist, dass sie die erste Zuführeinheit zur Verhinderung einer Kleinteileausgabe absperrt, wenn die Übergabeschütte den Abgabebereich verlässt oder verlassen hat.

Eine aus der EP 1 547 946 A2 bekannte Zuführeinrichtung dieser Art hat einen Speicherbehälter, in dem sich Kleinteile befinden, die mittels eines Vibrationsförderers zu einer in einem Abgabebereich befindlichen Rinne gefördert werden, von der aus sie in einen Sammelbehälter gelangen, der eine Abgabeöffnung hat, der eine bewegliche Verschlussplatte zugeordnet ist. Die Zuführeinrichtung hat ferner Übergabemittel mit einem verschwenkbaren Arm und einem an dem Arm angebrachten Behälter, wobei der Behälter durch ein Verschwenken des Arms abwechselnd in eine Position bei der Abgabeöffnung zum Empfangen von Kleinteilen und in eine Position bei dem Speicherbehälter zum neuerlichen Zuführen der empfangenen Kleinteile in den Vibrationsförderer verbracht werden kann.

Eine aus der DE 10 2015 102 143 A1 bekannte Zuführeinrichtung enthält einen Stufenförderer, der zwei nebeneinander angeordnete, in vertikaler Richtung linear verschiebbare Stufenschieber aufweist. Der eine Stufenschieber ist dem Abgabebereich einer ersten Zuführeinheit zugeordnet, der zweite Stufenschieber dem im Vergleich zum Abgabebereich höher liegenden Zuführbereich einer zweiten Zuführeinheit. Beide Stufenschieber habe eine geneigte Oberfläche und führen im Betrieb eine alternierende Hubbewegung aus, sodass Kleinteile, die durch die erste Zuführeinheit zugeführt werden, schrittweise zwischen den Stufenschiebern übergeben und vom zweiten Stufenschieber an die höher liegende zweite Zuführeinheit übergeben werden. Derartige Stufenförderer arbeiten sehr zuverlässig, bringen jedoch einen gewissen Verschleiß mit sich und sind aufgrund zwischen aneinander abgleitenden Bestandteilen entstehenden Abriebes für Reinraumanwendungen problematisch.

Der Erfindung liegt die Aufgabe zugrunde, Maßnahmen zu treffen, um die Übergabe von Kleinteilen zwischen Bereichen unterschiedlicher Höhe mit geringem Verschleiß und bei guter Reinraumtauglichkeit zu ermöglichen.

Zur Lösung dieser Aufgabe ist bei einer Zuführeinrichtung mit den eingangs genannten Merkmalen vorgesehen, dass die zweite Zuführeinheit eine Sortiereinheit zum Sortieren der Kleinteile aufweist, die eine Rückführeinrichtung zur Rückführung aussortierter Kleinteile in die erste Zuführeinheit enthält.

Bei einem solchen Schwenk-Stufenförderer besteht die Möglichkeit einer einfachen und zuverlässigen räumlichen Abtrennung zwischen der Antriebseinrichtung und der mindestens einen Schwenkeinheit. Der Arbeitsbereich der mindestens einen Schwenkeinheit kann von einem die bevorzugt als Drehantriebseinrichtung ausgebildete Antriebseinrichtung aufnehmenden Bereich zuverlässig dicht abgeschottet werden. Da die für die Übertragung des Drehmoments zwischen der Antriebseinrichtung und einer jeweiligen Schwenkeinheit erforderlichen Komponenten ihre Axiallage beibehalten können und lediglich eine rotative Bewegung ausführen müssen, kann eine Übertragung von Verunreinigungen zwischen dem Arbeitsbereich und dem hiervon gegebenenfalls abgeschotteten Bereich der Antriebseinrichtung ausgeschlossen werden, was den Einsatz der Zuführeinrichtung für Reinraumanwendungen begünstigt. Zudem ist der im Betrieb auftretende Abrieb gering. Auch ermöglicht die Schwenkbewegung der mindestens einen Schwenkeinheit einen gleichmäßigen Kleinteiletransport mit wenig Erschütterungen und folglich geringem Beschädigungsrisiko. Der Schwenk-Stufenförderer kann über nur eine einzige Schwenkeinheit verfügen, die die Teileübergabe direkt zwischen der ersten und der zweiten Zuführeinheit vornimmt. Er kann aber auch mehrere funktionell hintereinandergeschaltete Schwenkeinheiten aufweisen, zwischen denen die Kleinteile bei ihrem Weg von der ersten zur zweiten Zuführeinheit intern übergeben werden. Bei einer Ausgestaltung mit mehreren Schwenkeinheiten lassen sich problemlos auch längere Förderstrecken überbrücken. Außerdem können die Schwenkwinkel der einzelnen Schwenkeinheiten besonders gering gehalten werden, was die Förderleistung begünstigt. Eine konstruktiv einfache und dennoch präzise Lösung zur Realisierung der jeweiligen Schwenkeinheit besteht darin, dass jede Übergabeschütte an einer radial von der zugeordneten Schwenkachse abstehenden Schwenkarmanordnung angebracht ist. Dem Abgabebereich der ersten Zuführeinheit ist eine bewegliche Absperrwand zugeordnet, deren Bewegung mit der Schwenkbewegung der der ersten Zuführeinheit benachbarten Schwenkeinheit so koordiniert ist, dass sie die erste Zuführeinheit zur Verhinderung einer Kleinteileausgabe absperrt, wenn die mit Kleinteilen befüllte Übergabeschütte den Abgabebereich verlässt. Die erste Zuführeinheit ist als ein Vibrationsförderer ausgebildet. Die zweite Zuführeinheit weist eine Sortiereinheit zum Sortieren der zugeführten Kleinteile auf. Die Kleinteile können in der Sortiereinheit hinsichtlich gewisser Kriterien sortiert werden, beispielsweise hinsichtlich einer für einen nachfolgenden Prozess erforderlichen Orientierung. Die Sortiereinheit ist vorzugsweise eine Linearsortiereinheit, kann aber beispielsweise auch eine Rundsortiereinheit sein. Die Sortiereinheit umfasst auch eine Rückführeinrichtung zur Rückführung aussortierter Kleinteile in die erste Zuführeinheit.

Vorteilhafte Weiterbildungen der Erfindung gehen aus den Unteransprüchen hervor.

Zweckmäßigerweise ist die die Kleinteile von der ersten Zuführeinheit empfangende Übergabeschütte in dem zugeordneten Abgabebereich tiefer positionierbar als der zugeordnete Endabschnitt der Förderebene der ersten Zuführeinheit. Dadurch können die die erste Zuführeinheit verlassenden Kleinteile störungsfrei von oben her in die nach oben hin offene Übergabeschütte hineinfallen. Die zur Übergabe der Kleinteile an die zweite Zuführeinheit vorgesehene Übergabeschütte kann in dem Zuführbereich der zweiten Zuführeinheit oberhalb des Endabschnittes der Förderebene der zweiten Zuführeinheit positioniert werden, sodass die zu übergebenden Kleinteile von der entsprechend positionierten Übergabeschütte von oben her in die zweite Zuführeinheit hineinfallen können.

Die Antriebseinrichtung ist bevorzugt zur Umgebung hin abgeschirmt in einem von einer Begrenzungswand begrenzten Antriebsraum der Zuführeinrichtung untergebracht. Jede Schwenkeinheit ist in einem außerhalb des Antriebsraumes befindlichen Arbeitsbereich angeordnet und wird von einer die Begrenzungswand abgedichtet drehbar durchsetzenden Antriebswelle angetrieben, die zur Erzeugung der Schwenkbewegung der zugeordneten Schwenkeinheit durch die Antriebseinrichtung rotativ antreibbar ist. Die Begrenzungswand kann beispielsweise ein kastenförmiges Aufnahmegehäuse für die Antriebseinrichtung bilden. In dem Aufnahmeraum ist bevorzugt auch eine elektronische Steuereinheit untergebracht, die die bevorzugt elektrisch betätigbare Antriebseinrichtung ansteuern kann.

Die bevorzugt elektrisch betätigbare Antriebseinrichtung ist insbesondere als Drehantriebseinrichtung ausgebildet. Sie enthält zweckmäßigerweise pro Schwenkeinheit eine eigene Antriebseinheit, insbesondere eine Drehantriebseinheit, bei der es sich insbesondere um einen elektrischen Antriebsmotor handelt, bevorzugt um einen elektrischen Schrittmotor.

Wie schon angedeutet, ist es vorteilhaft, wenn der Schwenk-Stufenförderer mehrere in einer Förderrichtung funktionell hintereinandergeschaltete Schwenkeinheiten aufweist. Diese mehreren Schwenkeinheiten sind bevorzugt um zueinander parallel ausgerichtete Schwenkachsen verschwenkbar, wobei die zu fördernden Kleinteile zwischen den hintereinandergeschalteten Schwenkeinheiten nacheinander übergebbar sind. Eine der Schwenkeinheiten bildet eine der ersten Zuführeinheit zugeordnete Eingangs-Schwenkeinheit, deren Übergabeschütte zum Empfang von Kleinteilen in den Abgabebereich der ersten Zuführeinheit verschwenkbar ist. Eine weitere Schwenkeinheit bildet eine der zweiten Zuführeinheit zugeordnete Ausgangs-Schwenkeinheit, deren Übergabeschütte in den Zuführbereich der zweiten Zuführeinheit verschwenkbar ist, um Kleinteile an die zweite Zuführeinheit zu übergeben.

Die Anzahl der mehreren Schwenkeinheiten ist prinzipiell beliebig. Als besonders vorteilhaft hinsichtlich Kostenaufwand und Effektivität hat es sich erwiesen, wenn der Schwenk-Stufenförderer genau zwei Schwenkeinheiten umfasst, zwischen denen die Kleinteile übergebbar sind und von denen die eine die Eingangs-Schwenkeinheit und die andere die Ausgangs-Schwenkeinheit bildet. Im Zusammenhang mit mehreren Schwenkeinheiten ist es zweckmäßig, die Ausgestaltung so vorzunehmen, dass die Übergabeschütten in der Förderrichtung unmittelbar aufeinanderfolgender Schwenkeinheiten derart in einem internen Übergabebereich des Schwenk-Stufenförderers positionierbar sind, dass die Übergabeschütte der näher bei dem Zuführbereich liegenden Schwenkeinheit eine Befüllposition einnimmt und zugleich die Übergabeschütte der näher bei dem Ausgabebereich liegenden Schwenkeinheit eine Entleerposition einnimmt, die oberhalb der Befüllposition liegt, sodass Kleinteile aus der die Entleerposition einnehmenden Übergabeschütte nach unten in die die Befüllposition einnehmende Übergabeschütte herausfallen können.

Die Schwenkachsen der mehreren Schwenkeinheiten liegen zweckmäßigerweise auf unterschiedlichem Höhenniveau. Insbesondere in diesem Zusammenhang ist es vorteilhaft, wenn die Schwenkachse jeder Schwenkeinheit vertikal höher liegt als die Schwenkeinheit der ihr entgegen der Förderrichtung zum Abgabebereich hin vorgeordneten Schwenkeinheit. Enthält der Schwenk-Stufenförderer nur zwei Schwenkeinheiten, liegt die Schwenkachse der Eingangs-Schwenkeinheit bevorzugt vertikal tiefer als die Schwenkachse der Ausgangs-Schwenkeinheit.

Die Schwenkachsen der mehreren Schwenkeinheiten verlaufen zweckmäßigerweise in zueinander beabstandeten Vertikalebenen. Die Schwenkachse der Eingangs-Schwenkeinheit liegt dabei bevorzugt horizontal näher bei dem Abgabebereich als die Schwenkachse der Ausgangs-Schwenkeinheit, wobei Letztere zudem bevorzugt vertikal höher liegt als die Schwenkachse der Eingangs-Schwenkeinheit.

Es ist zweckmäßig, wenn jede Schwenkeinheit durch ihre Schwenkbewegung sowohl in eine mit Kleinteilen befüllbare Befüllposition als auch in eine die eingefüllten Kleinteile übergebende Entleerposition verschwenkbar ist. Eine bevorzugt vorhandene elektronische Steuereinheit der Zuführeinrichtung ist insbesondere in der Lage, die elektrisch betätigbare Antriebseinrichtung derart anzusteuern, dass zur gleichen Zeit stets nur eine einzige der mehreren Schwenkeinheiten eine Schwenkbewegung ausführt. Allerdings kann die elektronische Steuereinheit auch so programmiert sein, dass von den mehreren Schwenkeinheiten wenigstens zwei Schwenkeinheiten zumindest partiell gleichzeitig verschwenkt werden.

Die Schwenkarmanordnung kann nur einen einzigen Schwenkarm oder aber, zur Verbesserung der Stabilität, mehrere in zueinander parallelen Ebenen liegende Schwenkarme aufweisen. Damit die Schwenkeinheiten ohne gegenseitige Behinderung auf engstem Raum angeordnet werden können, ist es vorteilhaft, wenn mindestens eine Schwenkarmanordnung in einer zur zugeordneten Schwenkachse rechtwinkeligen Schwenkebene mindestens einfach abgebogen ist.

Als vorteilhaft wird es angesehen, wenn jede Übergabeschütte rein schwerkraftbedingt um eine zur Schwenkachse der zugeordneten Schwenkeinheit parallele Kippachse begrenzt kippbeweglich an der sie tragenden Schwenkarmanordnung gelagert ist. Dadurch kann erreicht werden, dass jede Übergabeschütte beim Übergang in die Entleerposition relativ zur zugeordneten Schwenkarmanordnung in eine steilere Position verkippt wird, was das Herausschütten der enthaltenen Kleinteile begünstigt.

Die Absperrwand ist bevorzugt direkt an der Übergabeschütte angeordnet, sodass sie deren Bewegung synchron mitmacht. Möglich ist allerdings auch eine an der ersten Zuführeinheit beweglich angeordnete Absperrwand, die abhängig von der Schwenkbewegung der zugeordneten Schwenkeinheit bewegbar ist. Eine solche Absperrwand ist beispielsweise federbelastet in eine Absperrstellung vorgespannt, aus der sie durch die sich in den Abgabebereich bewegende Schwenkeinheit verdrängt werden kann.

Auch die zweite Zuführeinheit ist zweckmäßigerweise als ein Vibrationsförderer ausgebildet. Hierbei empfiehlt sich insbesondere eine Bauform als Linearvibrationsförderer.

Jeder Vibrationsförderer kann sich aus mehreren eigenständig antreibbaren Vibrationsförderereinheiten zusammensetzen.

Bevorzugt umfasst die Sortiereinheit mindestens eine sogenannte Sortierschiene, die von den zu sortierenden Kleinteilen durchlaufen wird. An die mindestens eine Sortierschiene schließt sich insbesondere mindestens eine Stauschiene an, in der bereits sortierte, auf eine Weiterverarbeitung wartende Kleinteile aufstaubar sind.

Die Rückführeinrichtung kann beispielsweise als Rückführrutsche ausgebildet sein.

Nachfolgend wird die Erfindung anhand der beiliegenden Zeichnung näher erläutert. In dieser zeigen:

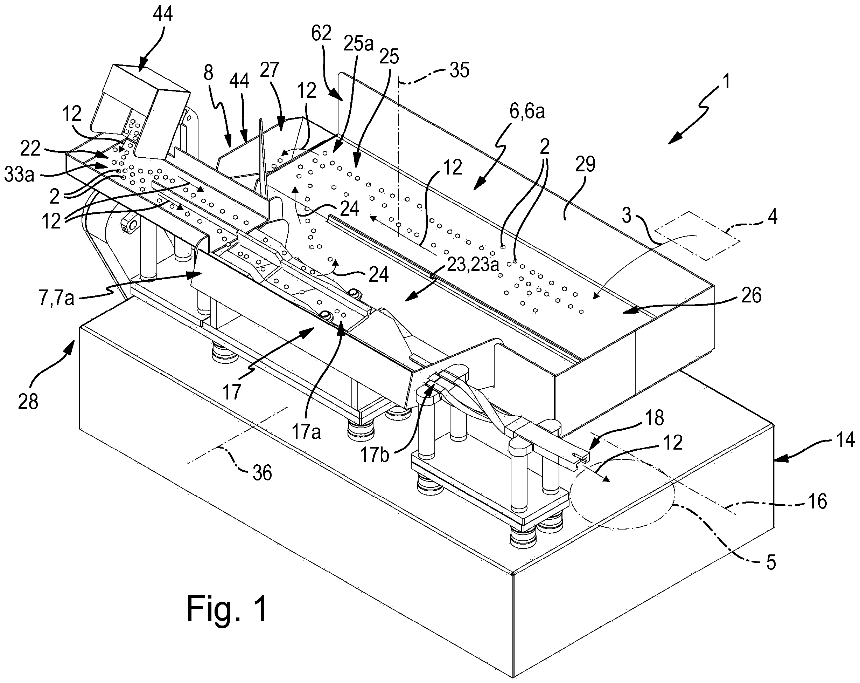

Figur 1 eine bevorzugte Ausführungsform der erfindungsgemäßen Zuführeinrichtung in einer perspektivischen Ansicht,
Figur 2 eine weitere perspektivische Abbildung der Zuführeinrichtung gemäß Figur 1 aus einem anderen Blickwinkel,

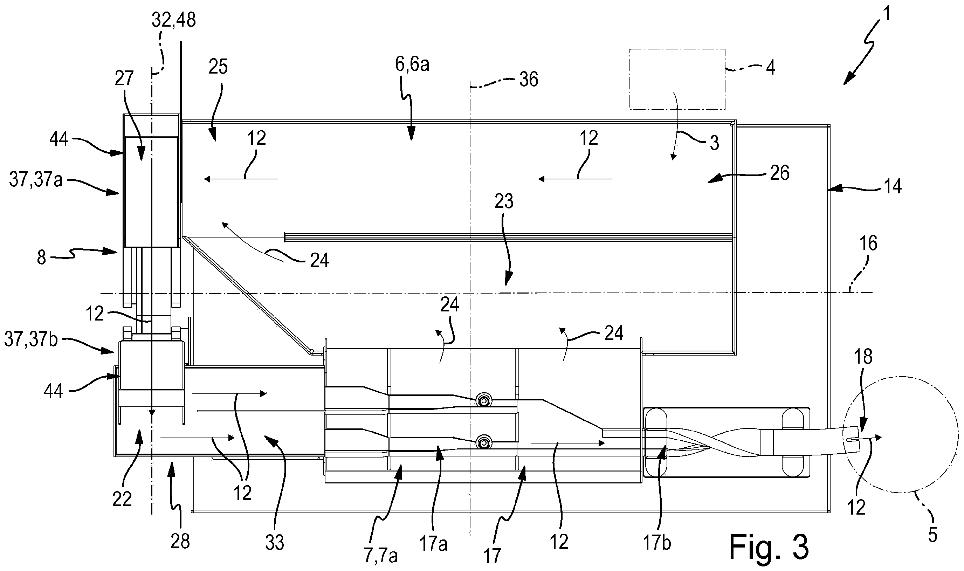

Figur 3 eine Draufsicht der Zuführeinrichtung mit Blickrichtung gemäß Pfeil III aus Figur 2,
Figur 4 eine Seitenansicht der Zuführeinrichtung mit Blickrichtung gemäß Pfeil IV aus Figur 2,
Figur 5 eine Vorderansicht der Zuführeinrichtung mit Blickrichtung gemäß Pfeil V aus Figur 2, wobei der Arbeitsbereich gut sichtbar ist, in dem der Schwenk-Stufenförderer angeordnet ist, und
Fig. 6-8 eine der Figur 5 entsprechende Vorderansicht in unterschiedlichen Betriebsphasen des Schwenk-Stufenförderers.

Die in ihrer Gesamtheit mit Bezugsziffer 1 bezeichnete Zuführeinrichtung ist dazu verwendbar, Kleinteile 2, die gemäß Pfeil 3 schüttgutartig seitens einer Bereitstellungseinrichtung 4 bereitgestellt werden, einer ebenfalls nur schematisch angedeuteten Verarbeitungseinrichtung 5 zuzuführen.

Die Bereitstellungseinrichtung 4 ist beispielsweise eine Bevorratungseinrichtung. Bei den Kleinteilen 2 handelt es sich insbesondere, jedoch nicht ausschließlich, um Produkte aus dem Pharmabereich, beispielsweise um Verschlüsse für pharmazeutische Mittel enthaltende Behältnisse. In der Verarbeitungseinrichtung 5 werden die Kleinteile produktspezifisch weiterverwertet, wobei es sich bei der Verarbeitungseinrichtung 5 beispielsweise um eine Abfüllanlage handeln kann, in der als Verschlüsse ausgebildete Kleinteile 2 auf gefüllte Behältnisse aufgebracht, beispielsweise aufgeschraubt werden.

Die Zuführeinrichtung 1 hat eine erste Zuführeinheit 6, die gemäß Pfeil 3 in einem Beschickungsbereich 26 mit den zuzuführenden Kleinteilen 2 beschickbar ist. Die Zuführeinrichtung 1 hat außerdem eine zweite Zuführeinheit 7, an die die Kleinteile 2 aus der ersten Zuführeinheit 6 übergebbar sind und durch die die Kleinteile 2 der Verarbeitungseinrichtung 5 zuführbar sind.

Für die Übergabe der Kleinteile 2 aus der ersten Zuführeinheit 6 an die zweite Zuführeinheit 7 ist die Zuführeinrichtung 1 mit einem Schwenk-Stufenförderer 8 ausgestattet.

Durch diverse Pfeile 12 sind Fördervorgang und Förderrichtung der Kleinteile 2 beim Durchlaufen der Zuführeinrichtung 1 angedeutet.

Der Vorgang des Förderns der Kleinteile 2 in den Zuführeinheiten 6, 7 wird zweckmäßigerweise dadurch hervorgerufen, dass die jeweilige Zuführeinheit 6, 7 als ein Vibrationsförderer 6a, 6b ausgebildet ist. Den Vibrationsförderern 6a, 7a ist eine nur schematisch angedeutete Vibrationserzeugungsvorrichtung 13 zugeordnet, um die Zuführeinheiten 6, 7 in Vibrationen zu versetzen, die eine Vorwärtsbewegung der darin befindlichen Kleinteile 2 in der Förderrichtung 12 hervorrufen.

Die Vibrationserzeugungseinrichtung 13 kann mehrere individuelle Vibrationserzeugungseinheiten umfassen, die mit unterschiedlichen Teileinheiten der Zuführeinheiten 6, 7 zusammenwirken. Da der Aufbau von Vibrationserzeugungseinrichtungen 13 als solches bekannt ist, wird an dieser Stelle nicht weiter darauf eingegangen.

Die Zuführeinrichtung 1 hat eine Basiseinheit 14, die an einer Oberseite die beiden Zuführeinheiten 6, 7 trägt. In der Basiseinheit 14 ist die Vibrationserzeugungseinrichtung 13 untergebracht, an der die Zuführeinheiten 6, 7 über die Vibrationsbewegung ermöglichende gummielastische Kopplungsmittel 15 befestigt sind.

Bevorzugt und exemplarisch sind die beiden Zuführeinheiten 6, 7 für eine Linearförderung der Kleinteile 2 ausgebildet. Die Förderrichtung der Kleinteile 2 in den beiden Zuführeinheiten 6, 7 verläuft beispielhaft zumindest im Wesentlichen parallel zu einer strichpunktiert angedeuteten Längsachse 16 der Zuführeinrichtung 1. Diese Längsachse 16 ist horizontal ausgerichtet.

Insbesondere in diesem Zusammenhang ist jeder Vibrationsförderer 6a, 7a bevorzugt als ein Linearvibrationsförderer ausgebildet. Dies trifft auf das illustrierte Ausführungsbeispiel zu.

Die zweite Zuführeinheit 7 umfasst zweckmäßigerweise eine Sortiereinheit 17, die eine nach vorbestimmten Kriterien sortierte aufeinanderfolgende Ausgabe von Kleinteilen 2 in einem Ausgabebereich 18 der zweiten Zuführeinheit 7 hervorrufen kann. Die an dem Ausgabebereich 18 ausgegebenen Kleinteile 2 werden direkt oder unter Zwischenschaltung weiterer Fördermittel der Verarbeitungseinrichtung 5 zugeführt.

Der Ausgabebereich 18 markiert einen hinteren Endbereich der zweiten Zuführeinheit 7. Ein diesbezüglich entgegen der Förderrichtung 12 beabstandeter entgegengesetzter vorderer Endbereich der zweiten Zuführeinheit 7 definiert einen Zuführbereich 22, in dem die Kleinteile 2 durch den Schwenk-Stufenförderer 8 an die zweite Zuführeinheit 7 übergeben werden.

An den Zuführbereich 22 schließt sich in der Förderrichtung 12 in der Richtung zu dem hinteren Endbereich exemplarisch die Sortiereinrichtung 17 an, die beispielhaft mindestens eine Sortierschiene 17a umfasst, die so gestaltet ist, dass die Kleinteile 2 bei ihrem Durchlaufen in eine vorbestimmte Ausrichtung gebracht werden. An die mindestens eine Sortierschiene 17a schließt sich in der Förderrichtung 12 exemplarisch eine Stauschiene 17b an, in der die in der Sortierschiene 17a mit gewünschter Ausrichtung sortierten Kleinteile aneinandergereiht aufgestaut werden, bis sie an dem Ausgabebereich 18 bedarfsgemäß austreten.

Der Aufbau der exemplarisch als Linearsortiereinheit ausgebildeten Sortiereinheit 17 orientiert sich an den jeweiligen Bedürfnissen und ist in der Zeichnung nur beispielhaft wiedergegeben.

Die Sortiereinheit 17 ist bevorzugt auch mit einer Rückführeinrichtung 23 ausgestattet, die der Rückführung von in der Sortiereinheit 17 aussortierten Kleinteilen 2 in die erste Zuführeinheit 6 dient. Die Rückführbewegung der Kleinteile 2 ist in der Zeichnung durch Pfeile 24 illustriert. Exemplarisch ist die Rückführeinrichtung 24 als eine Rückführrutsche 23a ausgebildet, auf der die aussortierten Kleinteile 2 von der höher liegenden zweiten Sortiereinheit 7 in die tiefer liegende erste Sortiereinheit 6 zurückrutschen können.

Die erste Zuführeinheit 6 hat, wie oben schon erwähnt, einen Beschickungsbereich 26, in dem die Kleinteile 2 gemäß Pfeil 3 aus der Bereitstellungseinrichtung 4 in sie einfüllbar sind. Die Kleinteile 2 gelangen dabei auf eine bevorzugt zumindest im Wesentlichen horizontale Förderebene 25 der ersten Zuführeinheit 6, die sich in der Achsrichtung der Längsachse 16 nach vorne bis hin zu einem Abgabebereich 27 erstreckt, vor dem sie mit einem vorderen Endabschnitt 25a endet.

Die Förderebene 25 der ersten Zuführeinheit 6 ist beispielhaft vom Boden einer Zuführwanne 29 definiert.

Der Schwenk-Stufenförderer 8 ist den beiden Zuführeinheiten 6, 7 an einer in der Achsrichtung der Längsachse 16 orientierten Vorderseite vorgelagert, wobei der entsprechende Bereich im Folgenden als Arbeitsbereich 28 des Schwenk-Stufenförderers 8 bezeichnet sei.

Sowohl der Abgabebereich 27 der ersten Zuführeinheit 6 als auch der Zuführbereich 22 der zweiten Zuführeinheit 7 befinden sich in dem Arbeitsbereich 28, wobei sie zweckmäßigerweise gemeinsam in einer zu der Längsachse 16 rechtwinkeligen Arbeitsebene 32 liegen. Der Abgabebereich 27 der ersten Zuführeinheit 6 und der Zuführbereich 22 der zweiten Zuführeinheit 7 liegen in der Achsrichtung der Längsachse 16 bevorzugt auf gleicher axialer Höhe.

Die zweite Zuführeinheit 7 erstreckt sich an ihrer dem Arbeitsbereich 28 zugewandten Vorderseite axial bis in den Zuführbereich 22 hinein. Sie hat eine Förderebene 33, auf der sich die Kleinteile 2 bei dem Fördervorgang 12 entlangbewegen und die in dem Zuführbereich 22 mit einem vorderen Endabschnitt 33a endet. Auch diese Förderebene 33 ist, wenigstens in dem vorderen Endabschnitt 33a, zumindest im Wesentlichen horizontal ausgerichtet. Zumindest im Bereich des vorderen Endabschnittes 33a ist die Förderebene 33 der zweiten Zuführeinheit 7 bevorzugt vom Boden einer wannenartigen Struktur 34 gebildet.

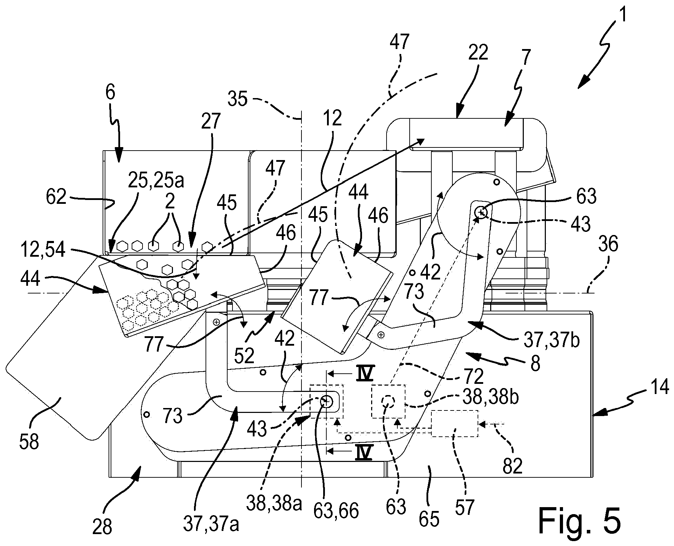

Wie insbesondere die Figuren 5 bis 8 gut vermitteln, befindet sich der Zuführbereich 22 höhenmäßig in vertikaler Richtung auf einem höheren Niveau als der Abgabebereich 27. Diese Höhendifferenz wird durch die Fördermaßnahme des Schwenk-Stufenförderers 8 überbrückt. Eine imaginäre vertikale Hochachse der Zuführeinrichtung 1 ist bei 35 angedeutet.

Der Schwenk-Stufenförderer 8 überbrückt auch einen zwischen dem Abgabebereich 27 der ersten Zuführeinheit 6 und dem Zuführbereich 22 der zweiten Zuführeinheit 7 vorhandenen horizontalen Abstand. Die Zuführeinrichtung 1 hat exemplarisch eine zu der Längsachse 16 und zu der Hochachse 35 rechtwinkelige Querachse 36, in deren Achsrichtung der Abgabebereich 27 bezüglich des höher liegenden Zuführbereiches 22 beabstandet ist.

Der Schwenk-Stufenförderer 8 hat mehrere Schwenkeinheiten 37, die jeweils mittels einer nur schematisch angedeuteten Antriebseinrichtung 38 zu einer hin und her gehenden Schwenkbewegung 42 um eine Schwenkachse 43 antreibbar sind. Die Antriebseinrichtung 38 ist bevorzugt eine Drehantriebseinrichtung.

Jede Schwenkeinheit 37 hat ihre eigene Schwenkachse 43, wobei alle Schwenkachsen 43 parallel zueinander verlaufen und außerdem zueinander beabstandet sind. Bevorzugt sind die Schwenkachsen 43 parallel zu der Längsachse 16 ausgerichtet.

Die Schwenkbewegung 42 erfolgt jeweils relativ zu den beiden Zuführeinheiten 6, 7 und exemplarisch auch relativ zu der die Zuführeinheiten 6, 7 tragenden Basiseinheit 14.

Jede Schwenkeinheit 37 verfügt über eine mit Querabstand zur Schwenkachse 43 der gleichen Schwenkeinheit 37 angeordnete Übergabeschütte 44. Bei der Übergabeschütte 44 handelt es sich um eine behälterartige Struktur mit einer Befüllöffnung 45 und einer Entleeröffnung 46. Diese beiden Öffnungen 45, 46 sind rechtwinkelig zu der Längsachse 16 orientiert. Sie gehen zweckmäßigerweise gemäß dem illustrierten Ausführungsbeispiel direkt ineinander über und können somit von Teilbereichen ein und derselben Gesamtöffnung gebildet sein.

Exemplarisch hat jede Übergabeschütte 44 eine Bodenwand 44a, eine Rückwand 44b und zwei sich mit Abstand gegenüberliegende Seitenwände 44c. Die Seitenwände 44c verlaufen parallel zueinander und sind in der Achsrichtung der Längsachse 16 zueinander beabstandet. Sie sind an der Unterseite von der Bodenwand 44a und an einer in Achsrichtung der Querachse 36 orientierten Rückseite durch die Rückwand 44b miteinander verbunden. Bei der Schwenkbewegung 42 verändert sich die Neigung sowohl der Bodenwand 44a als auch die Neigung der Rückwand 44b.

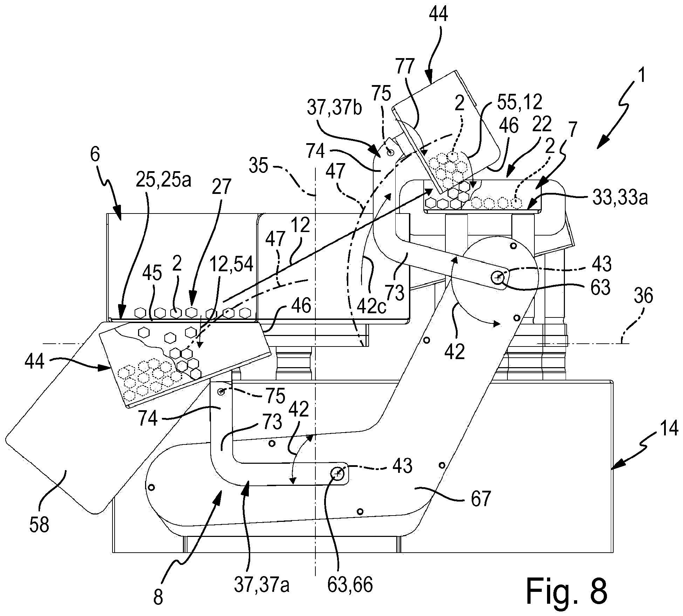

Führt eine Schwenkeinheit 37 die Schwenkbewegung 42 aus, bewegt sich ihre Übergabeschütte 44 entlang einer in den Figuren 5 und 8 strichpunktiert angedeuteten Bogenstrecke 47. Die Bogenstrecken 47 der mehreren Übergabeschütten 44 sind in der weiter oben erwähnten Arbeitsebene 32 zueinander versetzt. Die Schwenkbewegung 42 jeder Schwenkeinheit 37 findet in einer zu der Längsachse 16 rechtwinkeligen Schwenkebene 48 statt, die exemplarisch der Arbeitsebene 32 entspricht. Die Schwenkebenen 48 sämtlicher Schwenkeinheiten 37 fallen zweckmäßigerweise zusammen.

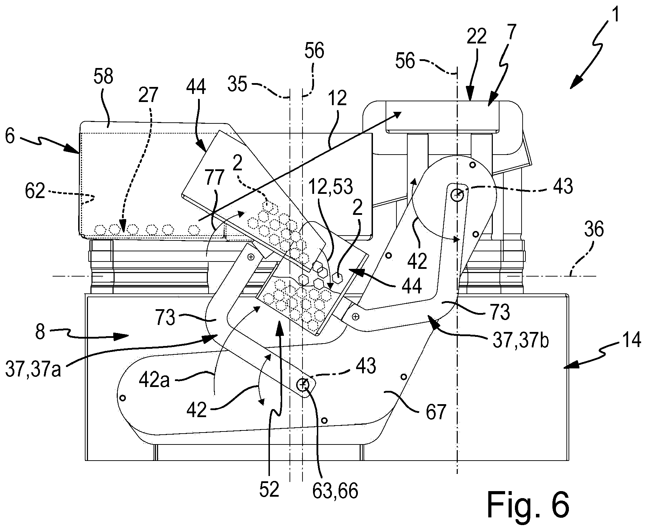

Die mehreren Schwenkeinheiten 37 sind in dem Arbeitsbereich 28 in der durch einen Pfeil angedeuteten Förderrichtung 12 funktionell hintereinandergeschaltet. In der Förderrichtung 12 unmittelbar aufeinanderfolgende Schwenkeinheiten 37 können in einem internen Übergabebereich 52 des Schwenk-Stufenförderers 8 Kleinteile 2 untereinander übergeben. Bei dem in Figur 6 durch einen Pfeil angedeuteten internen Übergabevorgang 53 fallen die Kleinteile 2 aus der einen Übergabeschütte 44 heraus und in die darauffolgende Übergabeschütte 44 hinein.

Der Schwenk-Stufenförderer 8 der in der Zeichnung illustrierten bevorzugten Ausführungsform der Zuführeinrichtung 1 hat genau zwei Schwenkeinheiten 37. Eine erste Schwenkeinheit, die als Eingangs-Schwenkeinheit 37a bezeichnet sei, ist der ersten Zuführeinheit 6 zugeordnet, während eine als Ausgangs-Schwenkeinheit 37b bezeichnete zweite Schwenkeinheit 37 der zweiten Zuführeinheit 7 zugeordnet ist.

Die Eingangs-Schwenkeinheit 37a ist so verschwenkbar, dass ihre Übergabeschütte 44 wahlweise eine Befüllposition in dem Abgabebereich 27 oder eine Entleerposition in dem internen Übergabebereich 52 einnimmt. Die Ausgangs-Schwenkeinheit 37b ist so verschwenkbar, dass ihre Übergabeschütte 44 wahlweise eine Befüllposition in dem internen Übergabebereich 52 oder eine Entleerposition in dem Zuführbereich 22 einnimmt.

Die im Abgabebereich 27 positionierte Übergabeschütte 44 der Eingangs-Schwenkeinheit 37a liegt in der Achsrichtung der Längsachse 16 unmittelbar vor dem vorderen Endabschnitt 25a der Förderebene 25 der ersten Zuführeinheit 6, wobei ihre Befüllöffnung 45 nach oben weist und mit dem besagten vorderen Endabschnitt 25a bündig ist oder diesbezüglich tiefer liegt. Von der ersten Zuführeinheit 6 geförderte Kleinteile 2 können somit am vorderen Endabschnitt 25a der Förderebene 25 aus der ersten Zuführeinheit 6 herausfallen und gemäß Pfeil 54 in Figuren 5, 7 und 8 durch die Befüllöffnung 45 hindurch von oben her in die die Befüllposition einnehmende Übergabeschütte 44 hineinfallen.

Die im Zuführbereich 22 positionierte Übergabeschütte 44 der Ausgangs-Schwenkeinheit 37b erstreckt sich zumindest teilweise direkt oberhalb des vorderen Endabschnittes 33a der Förderebene 33 der zweiten Zuführeinheit 7, wobei ihre Entleeröffnung 46 nach unten weist, sodass in ihr befindliche Kleinteile 2 gemäß Pfeil 55 herausfallen und in die zweite Zuführeinheit 7 hineinfallen können.

Durch die Antriebseinrichtung 38 können die beiden Schwenkeinheiten 37, 37a, 37b so positioniert werden, dass sich ihre beiden Übergabeschütten 44 gleichzeitig gemäß Figur 6 in dem internen Übergabebereich befinden, wobei die Übergabeschütte 44 der Ausgangs-Schwenkeinheit 37b ihre Befüllposition einnimmt, in der sie von der ihre Entleerposition einnehmenden Übergabeschütte 44 der Eingangs-Schwenkeinheit 37a übergriffen ist. Die Entleeröffnung 46 der Übergabeschütte 44 der Eingangs-Schwenkeinheit 37a weist dabei nach unten und liegt im Bereich der nach oben weisenden Befüllöffnung 45 der Übergabeschütte 44 der Ausgangs-Schwenkeinheit 37b. Dadurch können Kleinteile 2 zuverlässig gemäß dem internen Übergabevorgang 53 aus der Übergabeschütte 44 der Eingangs-Schwenkeinheit 37a in die Übergabeschütte 44 der Ausgangs-Schwenkeinheit 37b übergeben werden.

Vorteilhaft ist es in diesem Zusammenhang, wenn der Schwenk-Stufenförderer 8 so konfiguriert ist, dass bei dem internen Übergabevorgang 53 die Übergabeschütte 44 der Eingangs-Schwenkeinheit 37a mit ihrem die Entleeröffnung 46 aufweisenden vorderen Endabschnitt durch die Befüllöffnung 45 der Übergabeschütte 44 der Ausgangs-Schwenkeinheit 37b in die zuletzt genannte Übergabeschütte 44 hineinragt.

Abweichend von dem illustrierten Ausführungsbeispiel, bei dem der Schwenk-Stufenförderer 8 genau zwei Schwenkeinheiten 37 aufweist, sind auch Weiterbildungen möglich, bei denen der Schwenk-Stufenförderer 8 über mehr als zwei in der Förderrichtung 12 hintereinandergeschaltete Schwenkeinheiten 37 verfügt. In diesem Fall bildet die erste Schwenkeinheit 37 eine Eingangs-Schwenkeinheit 37a und die letzte Schwenkeinheit 37 eine Ausgangs-Schwenkeinheit 37b, während jede dazwischen angeordnete Schwenkeinheit 37 nur dem Zweck dient, Kleinteile 2 aus der ihr entgegen der Förderrichtung 12 vorgeordneten Schwenkeinheit 37 in die ihr in der Förderrichtung 12 nachgeordnete Schwenkeinheit 37 zu übergeben. Jeder derartige interne Übergabevorgang 53 entspricht grundsätzlich dem weiter oben anhand der Figur 6 erläuterten.

Bei einem nicht illustrierten Ausführungsbeispiel enthält der Schwenk-Stufenförderer 8 nur eine einzige Schwenkeinheit 37, deren Übergabeschütte 44 im Rahmen der Schwenkbewegung 42 alternativ in einer Befüllposition im Abgabebereich 27 und in einer Entleerposition im Zuführbereich 32 positionierbar ist.

Es ist vorteilhaft, wenn die Schwenkachsen 43 der Schwenkeinheiten 37 auf einem voneinander abweichenden Höhenniveau liegen. Bevorzugt liegt die Schwenkachse 43 der in den Abgabebereich 27 verschwenkbaren Schwenkeinheit 37, 37a in Achsrichtung der Hochachse 35 am tiefsten, während die Schwenkachse 43 jeder weiteren in der Förderrichtung 12 folgenden Schwenkeinheit 37, 37a vertikal höher liegt als die entgegen der Förderrichtung 12 jeweils vorgeordnete Schwenkeinheit 37.

Die Schwenkachsen 43 der mehreren Schwenkeinheiten 37 liegen bevorzugt in zueinander beabstandeten Vertikalebenen 56. Jede Vertikalebene 56 erstreckt sich in den Achsrichtungen der Längsachse 16 und der Hochachse 35. Bevorzugt liegt die Schwenkachse 43 der Eingangs-Schwenkeinheit 37a unterhalb der ersten Zuführeinheit 6, während die Schwenkachse 43 der Ausgangs-Schwenkeinheit 37b unterhalb der höher als die erste Zuführeinheit 6 platzierten zweiten Zuführeinheit 7 liegt.

Die Figuren 5 bis 8 illustrieren Betriebsphasen eines Arbeitszyklus eines mit der Zuführeinrichtung 1 vorteilhaft durchführbaren Betriebsablaufes. Gesteuert wird der Betriebsablauf durch eine elektronische Steuereinheit 57 der Zuführeinrichtung 1, durch die unter anderem die Antriebseinrichtung 38 betriebsmäßig ansteuerbar ist. Die Antriebseinrichtung 38 ist insbesondere von einem elektrisch betätigbaren Typ, wobei sie insbesondere einen elektromotorischen Aufbau hat.

In einer aus Figur 5 ersichtlichen ersten Betriebsphase befindet sich die Eingangs-Schwenkeinheit 37a mit ihrer Übergabeschütte 44 in der Befüllposition im Abgabebereich 27. Die erste Zuführeinheit 6 ist in Betrieb und fördert nach und nach von der Bereitstellungseinrichtung 4 stammende Kleinteile 2 gemäß Pfeil 54 in die betreffende Übergabeschütte 44 hinein. Zur gleichen Zeit nimmt die Ausgangs-Schwenkeinheit 37b mit ihrer Übergabeschütte 44 die Befüllposition im internen Übergabebereich 52 ein und ist noch leer.

Sobald in der im Abgabebereich 27 positionierten Übergabeschütte 44 eine bestimmte Füllmenge erreicht ist, die sensorisch überwacht werden kann, veranlasst die elektronische Steuereinheit 57 eine Schwenkbewegung 42 der Eingangs-Schwenkeinheit 37a, sodass sie gemäß Pfeil 42a in Figur 6 in die Entleerposition im internen Übergabebereich 52 verschwenkt wird.

Das Auslösen des Verschwenkens gemäß Pfeil 42a kann auch rein zeitgesteuert hervorrufbar sein.

In dem internen Übergabebereich 52 werden sodann die Kleinteile 2 aus der Übergabeschütte 44 der Eingangs-Schwenkeinheit 37a gemäß Pfeil 53 in die Übergabeschütte 44 der Ausgangs-Schwenkeinheit 37b übergeben.

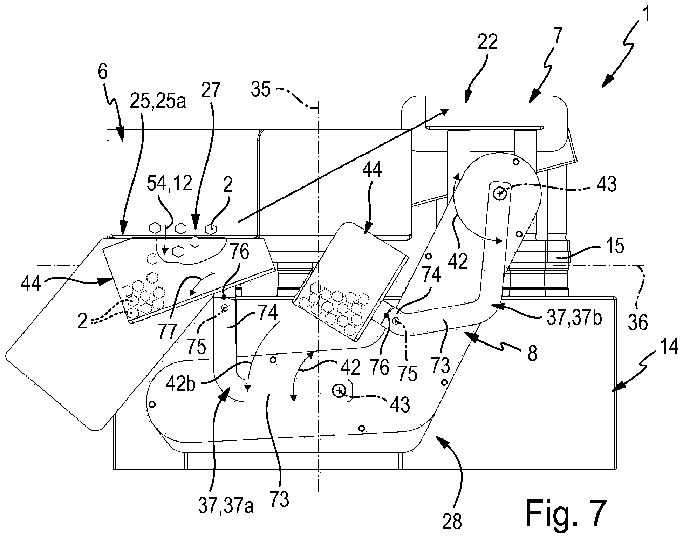

Als Nächstes veranlasst die elektronische Steuereinheit 57 entsprechend Figur 7 das Zurückschwenken gemäß Pfeil 42b der Eingangs-Schwenkeinheit 37a aus der Entleerposition im internen Übergabebereich 52 in die Befüllposition im Abgabebereich 27. Dort kann sich nun ein neuerlicher Befüllvorgang der Übergabeschütte 44 der Eingangs-Schwenkeinheit 37a gemäß Pfeil 54 anschließen.

Sobald die Eingangs-Schwenkeinheit 37a gemäß Pfeil 42b in die Befüllposition zurückgeschwenkt wurde, oder auch schon früher, veranlasst die elektronische Steuereinheit 57 eine Schwenkbewegung 42 der Ausgangs-Schwenkeinheit 37b, bei der diese Ausgangs-Schwenkeinheit 37b gemäß Pfeil 42c der Figur 8 aus der Befüllposition im internen Übergabebereich 52 in die Entleerposition im Zuführbereich 22 verschwenkt wird. Dort werden die in der Übergabeschütte 44 befindlichen Kleinteile 2 gemäß Pfeil 55 an die zweite Zuführeinheit 7 übergeben, die sie bestimmungsgemäß weiterfördert, sodass sie exemplarisch die Sortiereinheit 17 durchlaufen.

Nachdem die Übergabeschütte 44 der Ausgangs-Schwenkeinheit 37b entleert ist, befehligt die elektronische Steuereinheit 57 das Zurückschwenken der Ausgangs-Schwenkeinheit 37b entgegen der Richtung des Pfeils 42c in die aus Figur 5 ersichtliche Befüllposition im internen Übergabebereich 52. Dort erwartet die Übergabeschütte 44 der Ausgangs-Schwenkeinheit 37b die nächste Kleinteileladung aus der Übergabeschütte 44 der Eingangs-Schwenkeinheit 37a.

Der somit beendete Arbeitszyklus kann sich fortlaufend wiederholend stattfinden, bis letztlich alle gemäß Pfeil 3 in die Zuführeinrichtung 1 eingebrachten Kleinteile 2 verarbeitet sind.

Beim Ausführungsbeispiel wird die elektrisch betätigbare Antriebseinrichtung 38 durch die elektronische Steuereinheit 57 so angesteuert, dass zur gleichen Zeit stets nur jeweils eine einzige der mehreren Schwenkeinheiten 37, 37a, 37b eine Schwenkbewegung 42 ausführt. Es ist jedoch zur Erhöhung der Fördergeschwindigkeit vorteilhaft möglich, die Schwenkbewegungen 42 der Schwenkeinheiten 37 so zu koordinieren, dass zumindest einige Schwenkphasen zeitgleich stattfinden.

Die erste Zuführeinheit 6 ist zu dem ihr vorgelagerten Abgabebereich 27 hin über eine stirnseitige Abgabeöffnung 62 offen. Durch diese Abgabeöffnung 62 hindurch können die Kleinteile 2 gemäß Pfeil 54 in die im Abgabebereich 27 positionierte Übergabeschütte 44 hineinfallen. Damit durch diese Abgabeöffnung 62 hindurch keine Kleinteile 2 herausfallen können, wenn sich die Eingangs-Schwenkeinheit 37a aus der Befüllposition herausbewegt, ist der Abgabeöffnung 62 zweckmäßigerweise eine bewegliche Absperrwand 58 zugeordnet. Die Bewegung der Absperrwand 58 ist mit der Schwenkbewegung 42 der Eingangs-Schwenkeinheit 37a so koordiniert, dass sie eine die Abgabeöffnung 62 freigebende Freigabestellung einnimmt, wenn sich die Eingangs-Schwenkeinheit 37a in der Befüllposition befindet, und dass sie eine die Abgabeöffnung 62 absperrende Absperrstellung einnimmt, wenn die Eingangs-Schwenkeinheit 37a sich in die Entleerposition bewegt hat. Bevorzugt bewegt sich die Absperrwand 58 allmählich in die Absperrstellung wenn sich die Eingangs-Schwenkeinheit 37a in Richtung zu ihrer Entleerposition bewegt, und auch allmählich wieder zurück in die Freigabestellung, wenn sich die Eingangs-Schwenkeinheit 37a in Richtung zu ihrer Befüllposition bewegt.

Diese Absperrmaßnahme lässt sich sehr einfach dadurch realisieren, dass die Absperrwand 58 gemäß dem illustrierten Ausführungsbeispiel an der Übergabeschütte 44 der Eingangs-Schwenkeinheit 37a angeordnet ist und deren Bewegung unmittelbar mitmacht. Die Absperrwand 58 überragt die Übergabeschütte 44 in der Arbeitsebene 32, sodass sie nach und nach, insbesondere von unten her, vor die Abgabeöffnung 62 verschwenkt wird, wenn sich die Eingangs-Schwenkeinheit 37a in die Entleerposition verlagert.

In den Figuren 5, 7 und 8 ist die Absperrwand 58 bei Einnahme ihrer Freigabestellung gezeigt. In der Figur 6 nimmt die Absperrwand 58 die Absperrstellung ein.

Alternativ kann die Absperrwand 58 auch unabhängig von der Eingangs-Schwenkeinheit 37a ausgebildet und beweglich an der ersten Zuführeinheit 6 angeordnet sein, wobei geeignete Betätigungsmittel vorhanden sind, die abhängig von der Schwenkbewegung der Eingangs-Schwenkeinheit 37a das Umpositionieren der Absperrwand 58 zwischen der Freigabestellung und der Absperrstellung hervorrufen.

Jede Schwenkachse 43 ist beim Ausführungsbeispiel von der Längsachse einer durch die Antriebseinrichtung 38 drehangetriebenen Schwenkwelle 63 gebildet. Die Schwenkwelle 63 ist durch geeignete Drehlagermittel an der Basiseinheit 14 drehbar gelagert.

Die Antriebseinrichtung 38 ist zweckmäßigerweise in zur Umgebung hin abgeschirmter Weise in einem innerhalb der Basiseinheit 14 ausgebildeten Antriebsraum 64 untergebracht, wobei der Antriebsraum 64 umfangsseitig durch eine Begrenzungswand 65 der Basiseinheit 14 dicht verschlossen ist. Die Basiseinheit 14 kann dabei ein kastenförmiges Aufnahmegehäuse bilden.

Die Antriebseinrichtung 38 hat für jede Schwenkeinheit 37 eine eigene, als Drehantriebseinheit ausgebildete elektrische Antriebseinheit 38a, 38b, die in dem Antriebsraum 64 untergebracht ist und die eine durch die Begrenzungswand 65 hindurch in den Arbeitsbereich 28 ragende, rotativ antreibbare Antriebswelle 66 aufweist.

Bei den elektrischen Antriebseinheiten 38a, 38b handelt es sich vorzugsweise um elektrische Schrittmotoren.

Bei dem illustrierten Ausführungsbeispiel bildet die Antriebswelle 66 der einen Antriebseinheit 38a unmittelbar die die Eingangs-Schwenkeinheit 37a tragende Schwenkwelle 63. Die Antriebswelle 66 der anderen Antriebseinheit 38b hingegen ist in dem Arbeitsbereich 28 über ein unter einer Abdeckung 67 liegendes, nur schematisch angedeutetes Zugmittelgetriebe 72 mit der Schwenkwelle 63 der Ausgangs-Schwenkeinheit 37b antriebsmäßig verbunden. Beide Schwenkeinheiten 37 können somit unabhängig voneinander in ideal aufeinander abgestimmter Weise zu ihren Schwenkbewegungen 42 angetrieben werden.

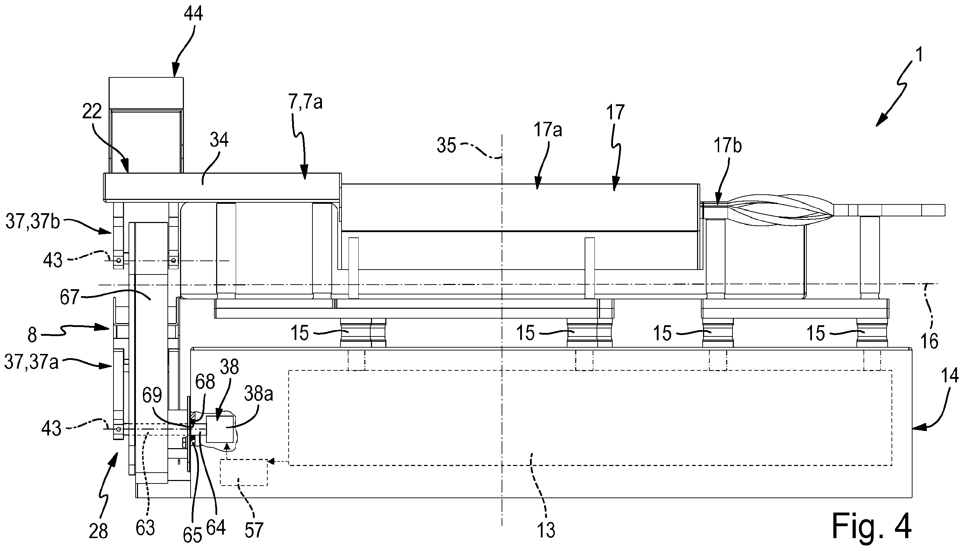

Jede Antriebswelle 66 durchsetzt eine Durchbrechung 69 der Begrenzungswand 65 in abgedichteter Weise, wobei in Figur 4 bei 68 eine dafür geeignete Wellendichtung angedeutet ist. Da das Antriebskonzept keine hin und her gehende Verlagerung von Antriebskomponenten aus dem Antriebsraum 64 in den außen vorgelagerten Arbeitsbereich 28 und zurück mit sich bringt, eignet sich der Schwenk-Stufenförderer 8 sehr gut zum Einsatz in Reinraumbereichen.

Es versteht sich, dass abweichend vom Ausführungsbeispiel bei jeder Schwenkeinheit 37 die Schwenkwelle 63 unmittelbar von einer die Begrenzungswand 65 unter Abdichtung rotativ durchsetzenden Antriebswelle 66 gebildet sein kann. Ebenso kann jede Schwenkwelle 63 über ein Zugmittelgetriebe 72 oder eine andere Getriebeart mit einer eigenständigen Antriebswelle 66 antriebsmäßig gekoppelt sein.

Bevorzugt umfasst jede Schwenkeinheit 37 eine quer und insbesondere radial von der zugeordneten Schwenkachse 43 abstehende Schwenkarmanordnung 73, an der, beabstandet zur Schwenkachse 43, die zugeordnete Übergabeschütte 44 angebracht ist. Bevorzugt ist jede Schwenkarmanordnung 73 drehfest an einer der Schwenkwellen 63 befestigt. Beim Ausführungsbeispiel enthält jede Schwenkarmanordnung 73 ein Schwenkarmpaar. Jede Schwenkarmanordnung 73 kann alternativ aber auch aus nur einem einzigen Schwenkarm bestehen.

Jede Schwenkarmanordnung 73 hat zweckmäßigerweise an dem der Schwenkachse 43 entgegengesetzten Endbereich einen Lagerabschnitt 74, an dem die zugeordnete Übergabeschütte 44 befestigt ist.

Jede Schwenkarmanordnung 73 kann in der Schwenkebene 48 einfach oder mehrfach abgebogen sein, um eine optimale Kinematik bei den Schwenkbewegungen 42 zu ermöglichen, bei der die Schwenkeinheiten 37 auf engstem Raum ohne Kollisionsgefahr untergebracht sind.

Jede Übergabeschütte 44 kann am Lagerabschnitt 74 der Schwenkarmanordnung 73 starr befestigt sein. Hiervon abweichend empfiehlt es sich jedoch, die Befestigung der Übergabeschütte 44 am Lagerabschnitt 74 der Schwenkarmanordnung 73 so auszugestalten, dass eine zur zugeordneten Schwenkachse 43 parallele Kippachse 75 gebildet ist, um die die Übergabeschütte 44 relativ zur Schwenkarmanordnung 73 unter Ausführung einer durch einen Doppelpfeil angedeuteten Kippbewegung 77 um einen begrenzten Drehwinkel verkippbar ist. Dies ist beim illustrierten Ausführungsbeispiel verwirklicht.

Die Begrenzung des Kippwinkels ergibt sich durch miteinander kooperierende Anschlagflächen 76 an der Übergabeschütte 44 und am Lagerabschnitt 74.

Die Kippbewegung 77 wird bevorzugt rein schwerkraftbedingt ausgelöst, und zwar abhängig von der Schwenkposition der Schwenkarmanordnung 73. Dementsprechend nimmt die Übergabeschütte 44 entweder eine entgegen dem Uhrzeigersinn verschwenkte erste Kippposition oder eine im Uhrzeigersinn verschwenkte zweite Kippposition ein. Die eine Kippposition stimmt mit der Befüllposition überein, die andere Kippposition mit der Entleerposition. Dies hat zur Folge, dass die Neigung der Übergabeschütte relativ zur Schwenkarmanordnung 73 in der Entleerposition eine andere ist als in der Befüllposition.

Insgesamt hat diese kippbewegliche Lagerung den Effekt, dass die Bodenwand 44a der Übergabeschütte 44 in der Entleerposition stärker geneigt ist als wenn eine starre Verbindung zwischen der Übergabeschütte 44 und der Schwenkarmanordnung 73 vorläge. Auf diese Weise kann trotz eines möglichst geringen Schwenkwinkels der Schwenkbewegung 42 das schnelle Entleeren der Übergabeschütte 44 unterstützt werden.

Die elektronische Steuereinheit 57 ist zweckmäßigerweise gemeinsam mit der elektrischen Antriebseinrichtung 38 in dem Antriebsraum 64 der Basiseinheit 14 untergebracht. Sie kann über eine Kommunikationsschnittstelle 82 mit einer übergeordneten externen elektronischen Steuereinrichtung verbunden sein, die einen mit weiteren Anlagenkomponenten koordinierten Betrieb steuert.

Die elektronische Steuereinheit 57 steuert zweckmäßigerweise auch den Förderbetrieb der ersten und zweiten Zuführeinheit 6, 7.

An jeder Übergabeschütte 44 kann ein nicht weiter abgebildeter Handgriff angebracht sein, der zu Testzwecken ein manuelles Verschwenken erlaubt und/oder die Handhabung der Übergabeschütte 44 im Falle eines Auswechselns begünstigt.

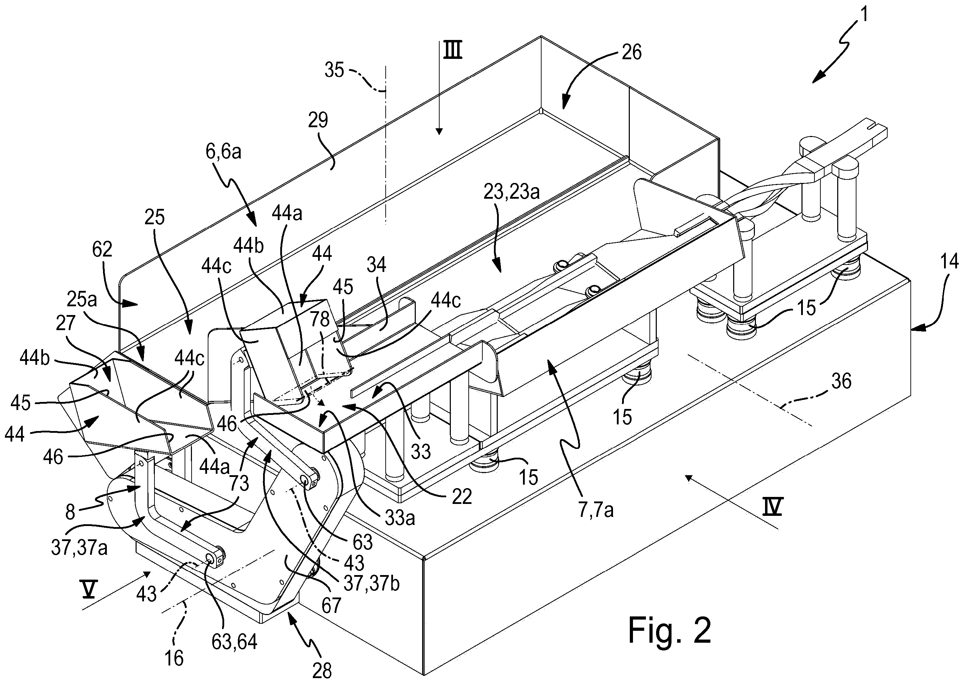

Die Übergabeschütte 44 kann eine der Entleeröffnung 46 zugeordnete verschwenkbare Verschlussklappe 78 aufweisen, die in Figur 2 strichpunktiert angedeutet ist und die schwerkraftbedingt verschwenkbar ist. Dies gilt insbesondere und bevorzugt ausschließlich für die Übergabeschütte 44 der Ausgangs-Schwenkeinheit 37b. Die Verschlussklappe 78 kann bei schnellen Schwenkbewegungen ein unerwünschtes Herausschleudern von Kleinteilen 2 verhindern. Befindet sich die Übergabeschütte 44 in der Entleerposition, schwenkt die Verschlussklappe 78 nach unten und gibt die Entleeröffnung 46 für den Austritt der Kleinteile 2 frei.

## Patentansprüche

1. Zuführeinrichtung für schüttgutartig bereitgestellte Kleinteile (2), mit einem Stufenförderer, der ausgebildet ist, um in einem Abgabebereich (27) einer zu der Zuführeinrichtung (1) gehörenden, als ein Vibrationsförderer (6a) ausgebildeten ersten Zuführeinheit (6) empfangene Kleinteile (2) in einem auf einem höheren Höhenniveau als dieser Abgabebereich (27) liegenden Zuführbereich (22) an eine zu der Zuführeinrichtung (1) gehörende zweite Zuführeinheit (7) zu übergeben, wobei der Stufenförderer als ein Schwenk-Stufenförderer (8) ausgebildet ist, der mindestens eine mittels einer Antriebseinrichtung (38) unter Ausführung einer Schwenkbewegung (42) um eine Schwenkachse (43) hin und her verschwenkbare Schwenkeinheit (37) umfasst, die eine beabstandet zu der Schwenkachse (43) an einer quer von der Schwenkachse (43) abstehenden Schwenkarmanordnung (73) angebrachte, sich bei der Schwenkbewegung (42) entlang einer Bogenstrecke (47) bewegende Übergabeschütte (44) für die zu übergebenden Kleinteile (2) aufweist, wobei dem Abgabebereich (27) der ersten Zuführeinheit (6) eine bewegliche Absperrwand (58) zugeordnet ist, deren Bewegung mit der Schwenkbewegung (42) der zugeordneten Schwenkeinheit (37) derart koordiniert ist, dass sie die erste Zuführeinheit (6) zur Verhinderung einer Kleinteileausgabe absperrt, wenn die Übergabeschütte (44) den Abgabebereich (27) verlässt oder verlassen hat, wobei die zweite Zuführeinheit (7) eine Sortiereinheit (17) zum Sortieren der Kleinteile (2) aufweist, **dadurch gekennzeichnet, dass** die Sortiereinheit eine Rückführeinrichtung (23) zur Rückführung aussortierter Kleinteile (2) in die erste Zuführeinheit (6) enthält.

2. Zuführeinrichtung nach Anspruch 1, **dadurch gekennzeichnet, dass** die die Kleinteile (2) in dem Abgabebereich (27) empfangende Übergabeschütte (44) in dem Abgabebereich (27) tiefer als der zugeordnete Endabschnitt (25a) der Förderebene (25) der ersten Zuführeinheit (6) positionierbar ist, und dass die die Kleinteile (2) in dem Zuführbereich (22) übergebende Übergabeschütte (44) oberhalb des zugeordneten Endabschnittes (33a) der Förderebene (33) der zweiten Zuführeinheit (7) positionierbar ist.

3. Zuführeinrichtung nach Anspruch 1 oder 2, **dadurch gekennzeichnet, dass** die Antriebseinrichtung (38) zur Umgebung hin abgeschirmt in einem von einer Begrenzungswand (65) begrenzten Antriebsraum (64) der Zuführeinrichtung (1) untergebracht ist, wobei die mindestens eine Schwenkeinheit (37) außerhalb des Antriebsraumes (64) mit einer die Begrenzungswand (65) abgedichtet drehbar durchsetzenden Antriebswelle (66) in Antriebsverbindung steht, die zur Erzeugung der Schwenkbewegung (42) durch die Antriebseinrichtung (38) rotativ antreibbar ist, und wobei die Antriebseinrichtung (38) zweckmäßigerweise als elektrische Drehantriebseinrichtung ausgebildet ist.

4. Zuführeinrichtung nach einem der Ansprüche 1 bis 3, **dadurch gekennzeichnet, dass** der Schwenk-Stufenförderer (8) mehrere in einer Förderrichtung (12) funktionell hintereinandergeschaltete und über zueinander parallele Schwenkachsen (43) verfügende Schwenkeinheiten (37) aufweist, zwischen denen die Kleinteile (2) nacheinander übergebbar sind, wobei die Übergabeschütte (44) einer Eingangs-Schwenkeinheit (37a) der Schwenkeinheiten (37) zum Empfang von Kleinteilen (2) in den Abgabebereich (27) der ersten Zuführeinheit (6) verschwenkbar ist und wobei die Übergabeschütte (44) einer Ausgangs-Schwenkeinheit (37b) der Schwenkeinheiten (37) zur Übergabe von Kleinteilen (2) an die zweite Zuführeinheit (7) in deren Zuführbereich (22) verschwenkbar ist, wobei jede Schwenkeinheit (37) eine quer von der zugeordneten Schwenkachse (43) abstehende Schwenkarmanordnung (73) umfasst, an der die zugeordnete Übergabeschütte (44) beabstandet zur Schwenkachse (43) angebracht ist.

5. Zuführeinrichtung nach Anspruch 4, **dadurch gekennzeichnet, dass** der Schwenk-Stufenförderer (8) genau zwei Schwenkeinheiten (37) umfasst, zwischen denen die Kleinteile (2) übergebbar sind und von denen die eine Schwenkeinheit (37) die Eingangs-Schwenkeinheit (37a) und die andere Schwenkeinheit (37) die Ausgangs-Schwenkeinheit (37b) bildet.

6. Zuführeinrichtung nach Anspruch 4 oder 5, **dadurch gekennzeichnet, dass** die Übergabeschütten (44) von in der Förderrichtung (12) unmittelbar aufeinanderfolgenden Schwenkeinheiten (37) derart in einem internen Übergabebereich (52) des Schwenk-Stufenförderers (8) positionierbar sind, dass die Übergabeschütte (44) der in der Förderrichtung (12) näher bei dem Zuführbereich (22) liegenden Schwenkeinheit (37) eine Befüllposition einnimmt und zugleich die Übergabeschütte (44) der entgegen der Förderrichtung (12) näher bei dem Ausgabebereich (27) liegenden Schwenkeinheit (37) eine die in der Befüllposition befindliche Übergabeschütte (44) übergreifende Entleerposition einnimmt, sodass Kleinteile (2) aus der die Entleerposition einnehmenden Übergabeschütte (44) nach unten in die die Befüllposition einnehmende Übergabeschütte (44) herausfallen können.

7. Zuführeinrichtung nach einem der Ansprüche 4 bis 6, **dadurch gekennzeichnet, dass** die Schwenkachsen (43) der mehreren Schwenkeinheiten (37) auf unterschiedlichem Höhenniveau liegen, wobei die Schwenkachse (43) jeder Schwenkeinheit (37) vertikal höher liegt als die Schwenkachse (43) der ihr entgegen der Förderrichtung (12) zum Abgabebereich (27) hin vorgeordneten Schwenkeinheit (37).

8. Zuführeinrichtung nach einem der Ansprüche 4 bis 7, **dadurch gekennzeichnet, dass** die Schwenkachsen (43) der mehreren Schwenkeinheiten (37) in zueinander beabstandeten Vertikalebenen (56) liegen.

9. Zuführeinrichtung nach einem der Ansprüche 4 bis 8, **dadurch gekennzeichnet, dass** jede Schwenkeinheit (37) durch ihre Schwenkbewegung (42) sowohl in eine mit Kleinteilen (2) befüllbare Befüllposition als auch in eine die eingefüllten Kleinteile (2) übergebende Entleerposition verschwenkbar ist, wobei eine elektronische Steuereinheit (57) vorhanden ist, durch die die Antriebseinrichtung (38) insbesondere derart ansteuerbar ist, dass zur gleichen Zeit stets nur eine einzige der mehreren Schwenkeinheiten (37) eine Schwenkbewegung (42) ausführt.

10. Zuführeinrichtung nach einem der Ansprüche 1 bis 9, **dadurch gekennzeichnet, dass** die Schwenkarmanordnung (73) mindestens einer Schwenkeinheit (37) in einer zur zugeordneten Schwenkachse (43) rechtwinkeligen Schwenkebene (48) mindestens einfach abgebogen ist.

11. Zuführeinrichtung nach Anspruch 10, **dadurch gekennzeichnet, dass** jede Übergabeschütte (44) rein schwerkraftbedingt um eine zur Schwenkachse (43) der zugeordneten Schwenkeinheit (37) parallele Kippachse (75) begrenzt kippbeweglich an der sie tragenden Schwenkarmanordnung (73) gelagert ist, derart, dass die Übergabeschütte (44) in einer mit Kleinteilen (2) befüllbaren Befüllposition eine andere Neigung bezüglich der Schwenkarmanordnung (73) einnimmt als in einer die eingefüllten Kleinteile (2) übergebenden Entleerposition.

12. Zuführeinrichtung nach einem der Ansprüche 1 bis 11, **dadurch gekennzeichnet, dass** die Absperrwand (58) an der Übergabeschütte (44) angeordnet ist und deren Bewegung synchron mitmacht oder dass die Absperrwand (58) beweglich an der ersten Zuführeinheit (6) angeordnet ist und abhängig von der Schwenkbewegung (42) der zugeordneten Schwenkeinheit (37) bewegbar ist, wobei sie federbelastet in eine Absperrstellung vorgespannt ist, aus der sie durch die sich in den Abgabebereich (27) bewegende Schwenkeinheit (37) verdrängt werden kann.

13. Zuführeinrichtung nach einem der Ansprüche 1 bis 12, **dadurch gekennzeichnet, dass** die erste Zuführeinheit (6) ein Linearvibrationsförderer ist und/oder dass die zweite Zuführeinheit (7) ein Vibrationsförderer (7a) ist, insbesondere ein Linearvibrationsförderer.

14. Zuführeinrichtung nach einem der Ansprüche 1 bis 13, **dadurch gekennzeichnet, dass** die Sortiereinheit (17) mindestens eine Sortierschiene (17a) aufweist, wobei die Sortiereinheit (17) zweckmäßigerweise mindestens eine sich an die mindestens eine Sortierschiene (17a) anschließende Stauschiene (17b) für sortierte, auf eine Weiterverarbeitung wartende Kleinteile (2) aufweist.

15. Zuführeinrichtung nach einem der Ansprüche 1 bis 14, **dadurch gekennzeichnet, dass** die Rückführeinrichtung (23) als Rückführrutsche (23a) ausgebildet ist.

## Claims

1. Feed device for small parts (2) provided as bulk goods, with a step conveyor designed to transfer small parts (2) received in a discharge region (27) of a first feed unit (6) belonging to the feed device (1) and designed as a vibratory conveyer (6a) to a second feed unit (7) belonging to the feed device (1) in a feed region (22) situated at a higher level than said discharge region (27), wherein the step conveyor is designed as a swivel step conveyor (8), which comprises a swivel unit (37), which is capable of pivoting to and fro about a swivel axis (43) while performing a swivelling movement (42) and has a transfer chute (44) for the small parts (2) to be transferred, which is mounted at a swivel arm assembly (73) projecting transversely from the swivel axis (43) at a distance from the swivel axis (43) and moving along a curved path (47) in the swivelling movement (42), wherein the discharge region (27) of the first feed unit (6) is assigned a movable blocking wall (58), the movement of which is coordinated with the swivelling movement (42) of the associated swivel unit (37) in such a way that is blocks the first feed unit (6) to prevent a release of small parts if the transfer chute (44) leaves or has left the discharge region (27), wherein the second feed unit (7) has a sorting unit (17) for sorting the small parts (2), **characterised in that** the sorting unit contains a return device (23) for returning sorted-out small parts (2) into the first feed unit (6).

2. Feed device according to claim 1, **characterised in that** the transfer chute (44) receiving the small parts (2) in the discharge region (27) is lower in the discharge region (27) than the associated end section (25a) of the conveying plane (25) of the first feed unit (6) can be positioned, and **in that** the transfer chute (44) transferring the small parts (2) in the feed region (22) can be positioned above the associated end section (33a) of the conveying plane (33) of the second feed unit (7).

3. Feed device according to claim 1 or 2, **characterised in that** the drive device (38) is accommodated in a drive chamber (64) of the feed device (1) bounded by a boundary wall (65) while being screened against the environment, wherein the at least one swivel unit (37) is drive-connected outside the drive chamber (64) to a drive shaft (65) passing through the boundary wall (65) in a sealed and rotatable manner, which drive shaft can be driven rotationally to generate the swivelling movement (42) by the drive device (38), and wherein the drive device (38) is expediently designed as an electric rotary drive device.

4. Feed device according to any of claims 1 to 3, **characterised in that** the swivel step conveyor (8) has a plurality of swivel units (37) arranged functionally one behind the other in a conveying direction (12) and having mutually parallel swivel axes (43), between which swivel units (37) the small parts (2) can be transferred consecutively, wherein the transfer chute (44) of an input swivel unit (37a) of the swivel units (37) can be swivelled to receive small parts (2) into the discharge region (27) of the first feed unit (6), and wherein the transfer chute (44) of an output swivel unit (37b) of the swivel units (37) can be swivelled to transfer small parts (2) to the second feed unit (7) in the feed region (22) thereof, wherein each swivel unit (37) comprises a swivel arm assembly (37), which projects transversely from the associated swivel axis (43) and to which the associated transfer chute (44) is attached at a distance from the swivel axis (43).

5. Feed device according to claim 4, **characterised in that** the swivel step conveyor (8) comprises precisely two swivel units (37), between which the small parts (2) can be transferred and of which the one swivel unit (37) is the input swivel unit (37a) and the other swivel unit (37) is the output swivel unit (37b).

6. Feed device according to claim 4 or 5, **characterised in that** the transfer chutes (44) can be positioned in an internal transfer region (52) of the swivel step conveyor (8) by swivel units (37) immediately consecutive in the conveying direction (12) in such a way that the transfer chute (44) of the swivel unit (37) which is closer to the feed region (22) in the conveying direction (12) occupies a filling position and at the same time the transfer chute (44) of the swivel unit (37) which is closer to the discharge region (27) against the conveying direction (12) occupies an emptying position overlapping the transfer chute (44) in the filling position, so that small parts (2) can drop from the transfer chute (44) occupying the emptying position downwards into the transfer chute (44) occupying the filling position.

7. Feed device according to any of claims 4 to 6, **characterised in that** the swivel axes (43) of the plurality of swivel units (37) lie at different height levels, wherein the swivel axis (43) of each swivel unit (37) lies at a higher level than the swivel axis (43) of the swivel unit (37) which is in front towards the discharge region (27) against the conveying direction (12).

8. Feed device according to any of claims 4 to 7, **characterised in that** the swivel axes (43) of the plurality of swivel units (37) lie in mutually spaced vertical planes (56).

9. Feed device according to any of claims 4 to 8, **characterised in that** each swivel unit (37) can be pivoted by its swivelling movement (42) both into a filling position in which it can be filled with small parts (2) and into an emptying position transferring the filled small parts (2), wherein an electronic control unit (57) is provided, whereby the drive device (38) can in particular be activated in such a way that always only a single one of the plurality of swivel units (37) performs a swivelling movement (42) at one and the same time.

10. Feed device according to any of claims 1 to 9, **characterised in that** the swivel arm assembly (73) of at least one swivel unit (37) is bent at least once in a swivelling plane (48) perpendicular to the associated swivel axis (43).

11. Feed device according to claim 10, **characterised in that** each transfer chute (44) is mounted at the swivel arm assembly (73) supporting it while being capable of tilting to a limited extent about a tilting axis (75) parallel to the swivel axis (43) of the associated swivel unit (37) in a purely gravity-contingent manner in such a way that the transfer chute (44) has, in a filling position in which it can be filled with small parts (2), an inclination relative to the swivel arm assembly (73) which differs from that which it has in an emptying position transferring the filled small parts (2).

12. Feed device according to any of claims 1 to 11, **characterised in that** the blocking wall (58) is located at the transfer chute (44) and participates in its movement synchronously, or **in that** the blocking wall (58) is movably located at the first feed unit (6) and movable in dependence on the swivelling movement (42) of the associated swivel unit (37), wherein it is spring-loaded into a blocking position from which it can be displaced by the swivel unit (37) moving into the discharge region (27).

13. Feed device according to any of claims 1 to 12, **characterised in that** the first feed unit (6) is a linear vibratory conveyor, and/or **in that** the second feed unit (7) is a vibratory conveyor (7a), in particular a linear vibratory conveyor.

14. Feed device according to any of claims 1 to 13, **characterised in that** the sorting unit (17) has at least one sorting rail (17a), wherein the sorting unit (17) expediently has at least one collector rail (17b) adjoining the at least one sorting rail (17a) for sorted small parts (2) waiting for further processing.

15. Feed device according to any of claims 1 to 14, **characterised in that** the return device (23) is designed as a return chute (23a).

## Revendications

1. Dispositif d'alimentation pour pièces de petite taille (2) fournies en vrac, avec un convoyeur à étages, qui est réalisé pour transférer, dans une zone de distribution (27) d'une première unité d'alimentation (6) appartenant au dispositif d'alimentation (1), réalisée en tant qu'un convoyeur à vibrations (6a), des pièces de petite taille (2) reçues dans une zone d'alimentation (22) située sur un niveau en hauteur plus élevé que ladite zone de distribution (27), à une deuxième unité d'alimentation (7) appartenant au dispositif d'alimentation (1), dans lequel le convoyeur à étages est réalisé en tant qu'un convoyeur à étages de pivotement (8), qui comprend au moins une unité de pivotement (37) pouvant pivoter en va-et-vient autour d'un axe de pivotement (43) au moyen d'un dispositif d'entraînement (38) en exécutant un déplacement par pivotement (42), laquelle présente un déversoir de distribution (44) pour les pièces de petite taille (2) à distribuer se déplaçant le long d'une voie cintrée (47) lors du déplacement par pivotement (42), installé sur un ensemble formant bras de pivotement (73) dépassant de manière transversale de l'axe de pivotement (43) de manière espacée par rapport à l'axe de pivotement (43), dans lequel est associée à la zone de distribution (27) de la première unité d'alimentation (6) une paroi d'arrêt (58) mobile, dont le déplacement est coordonné au déplacement par pivotement (42) de l'unité de pivotement (37) associée de telle manière qu'elle arrête la première unité d'alimentation (6) pour empêcher une distribution de pièces de petite taille lorsque le déversoir de transfert (44) quitte ou a quitté la zone de distribution (27),
dans lequel la deuxième unité d'alimentation (7) présente une unité de tri (17) pour trier les pièces de petite taille (2), **caractérisé en ce que** l'unité de tri contient un dispositif de retour (23) pour ramener des pièces de petite taille (2) triées dans la première unité d'alimentation (6).

2. Dispositif d'alimentation selon la revendication 1, **caractérisé en ce que** le déversoir de transfert (44) recevant les pièces de petite taille (2) dans la zone de distribution (27) peut être positionné dans la zone de distribution (27) plus bas que la section d'extrémité (25a) associée du plan de convoyage (25) de la première unité d'alimentation (6), et
**en ce que** le déversoir de transfert (44) transférant les pièces de petite taille (2) dans la zone d'alimentation (22) peut être positionné au-dessus de la section d'extrémité (33a) associée du plan de convoyage (33) de la deuxième unité d'alimentation (7).

3. Dispositif d'alimentation selon la revendication 1 ou 2, **caractérisé en ce que** le dispositif d'entraînement (38) est abrité, de manière protégée par rapport à l'environnement, dans un espace d'entraînement (64), délimité par une paroi de délimitation (65), du dispositif d'alimentation (1), dans lequel l'au moins une unité de pivotement (37) est en en liaison d'entraînement avec un arbre d'entraînement (66) traversant de manière à pouvoir tourner et de manière étanchéifiée la paroi de délimitation (65) à l'extérieur de l'espace d'entraînement (64), qui peut être entraîné en rotation par le dispositif d'entraînement (38) pour générer le déplacement par pivotement (42), et dans lequel le dispositif d'entraînement (38) est réalisé de manière opportune en tant que dispositif d'entraînement en rotation électrique.

4. Dispositif d'alimentation selon l'une quelconque des revendications 1 à 3, **caractérisé en ce que** le convoyeur à étages de pivotement (8) présente plusieurs unités de pivotement (37) montées les unes derrière les autres de manière fonctionnelle dans une direction de convoyage (12) et disposant d'axes de pivotement (43) parallèles les uns par rapport aux autres, entre lesquelles les pièces de petite taille (2) peuvent être transférées les unes après les autres, dans lequel le déversoir de transfert (44) d'une unité de pivotement d'entrée (37a) des unités de pivotement (37) peut être pivoté pour recevoir des pièces de petite taille (2) dans la zone de distribution (27) de la première unité d'alimentation (6) et dans lequel le déversoir de transfert (44) d'une unité de pivotement de sortie (37b) des unités de pivotement (37) peut être pivoté pour transférer des pièces de petite taille (2) à la deuxième unité d'alimentation (7) dans sa zone d'alimentation (22), dans lequel chaque unité de pivotement (37) comprend un ensemble formant bras de pivotement (73) dépassant de manière transversale de l'axe de pivotement (43) associé, sur lequel le déversoir de transfert (44) associé est installé de manière espacée par rapport à l'axe de pivotement (43).

5. Dispositif d'alimentation selon la revendication 4, **caractérisé en ce que** le convoyeur à étages de pivotement (8) comprend précisément deux unités de pivotement (37), entre lesquelles les pièces de petite taille (2) peuvent être transférées et dont une unité de pivotement (37) forme l'unité de pivotement d'entrée (37a) et l'autre unité de pivotement (37) forme l'unité de pivotement de sortie (37b).

6. Dispositif d'alimentation selon la revendication 4 ou 5, **caractérisé en ce que** les déversoirs de transfert (44) peuvent être positionnés par des unités de pivotement (37) se suivant directement les unes les autres dans la direction de convoyage (12) de telle manière dans une zone de transfert interne (52) du convoyeur à étages de pivotement (8) que le déversoir de transfert (44) de l'unité de pivotement (37) située davantage à proximité de la zone d'alimentation (22) dans la direction de convoyage (12) adopte une position de remplissage et, dans le même temps, le déversoir de transfert (44) de l'unité de pivotement (37) située davantage à proximité de la zone de distribution (27) dans le sens opposé à la direction de convoyage (12) adopte une position de vidage s'engageant pardessus du déversoir de transfert (44) se trouvant dans la zone de remplissage si bien que des pièces de petite taille (2) peuvent tomber depuis le déversoir de transfert (44) adoptant la position de vidage vers le bas dans le déversoir de transfert (44) adoptant la position de remplissage.

7. Dispositif d'alimentation selon l'une quelconque des revendications 4 à 6, **caractérisé en ce que** les axes de pivotement (43) des plusieurs unités de pivotement (37) se situent sur différents niveaux en hauteur, dans lequel l'axe de pivotement (43) de chaque unité de pivotement (37) se situe plus haut verticalement que l'axe de pivotement (43) de l'unité de pivotement (37) disposée en amont de celle-ci en direction de la zone de distribution (27) dans le sens opposé à la direction de convoyage (12).

8. Dispositif d'alimentation selon l'une quelconque des revendications 4 à 7, **caractérisé en ce que** les axes de pivotement (43) des plusieurs unités de pivotement (37) se situent dans des plans verticaux (56) espacés les uns par rapport aux autres.

9. Dispositif d'alimentation selon l'une quelconque des revendications 4 à 8, **caractérisé en ce que** chaque unité de pivotement (37) peut être pivotée par son déplacement de pivotement (42) à la fois dans une position de remplissage pouvant être remplie de pièces de petite taille (2) et dans une position de vidage transférant les pièces de petite taille (2) transvasées, dans lequel est présente une unité de commande électronique (57), par laquelle le dispositif d'entraînement (38) peut être piloté en particulier de telle manière que systématiquement seulement une seule des plusieurs unités de pivotement (37) exécute en même temps un déplacement par pivotement (42).

10. Dispositif d'alimentation selon l'une quelconque des revendications 1 à 9, **caractérisé en ce que** l'ensemble formant bras de pivotement (73) d'au moins une unité de pivotement (37) est coudé au moins une fois dans un plan de pivotement (48) à angle droit par rapport à l'axe de pivotement (43) associé.

11. Dispositif d'alimentation selon la revendication 10, **caractérisé en ce que** chaque déversoir de transfert (44) est monté sur l'ensemble formant bras de pivotement (73) le supportant avec une mobilité limitée en basculement autour d'un axe de basculement (75) parallèle à l'axe de pivotement (43) de l'unité de pivotement (37) associée seulement du fait de la gravité, de telle manière que le déversoir de transfert (44) adopte, dans une position de remplissage pouvant être remplie de pièces de petite taille (2), une inclinaison autre par rapport à l'ensemble formant bras de pivotement (73) que dans une position de vidage transférant les pièces de petite taille (2) transvasées.

12. Dispositif d'alimentation selon l'une quelconque des revendications 1 à 11, **caractérisé en ce que** la paroi d'arrêt (58) est disposée sur le déversoir de transfert (44) et accompagne de manière synchrone son déplacement, ou que la paroi d'arrêt (58) est disposée de manière mobile sur la première unité d'alimentation (6) et peut être déplacée en fonction du déplacement par pivotement (42) de l'unité de pivotement (37) associée, dans lequel elle est précontrainte sous l'effet d'un ressort dans une position d'arrêt, de laquelle elle peut être repoussée par l'unité de pivotement (37) se déplaçant dans la zone de distribution (27).

13. Dispositif d'alimentation selon l'une quelconque des revendications 1 à 12, **caractérisé en ce que** la première unité d'alimentation (6) est un convoyeur à vibrations linéaires et/ou que la deuxième unité d'alimentation (7) est un convoyeur à vibrations (7a), en particulier un convoyeur à vibrations linéaires.

14. Dispositif d'alimentation selon l'une quelconque des revendications 1 à 13, **caractérisé en ce que** l'unité de tri (17) présente au moins un rail de tri (17a), dans lequel l'unité de tri (17) présente de manière opportune au moins un rail de compression (17b) se raccordant à l'au moins un rail de tri (17a) pour des pièces de petite taille (2) triées, en attente d'un traitement ultérieur.

15. Dispositif d'alimentation selon l'une quelconque des revendications 1 à 14, **caractérisé en ce que** le dispositif de retour (23) est réalisé en tant que glissière de retour (23a).
